# EUROPEAN PATENT APPLICATION

(11) **EP 4 468 468 A2**
(43) Date of publication of application: **27.11.2024**
(21) Application number: 23213325.6
(22) Date of filing: 30.11.2023
(51) Int. Cl.: H01M 50/103, H01M 50/14, H01M 50/15, H01M 50/342

(54) **SECONDARY BATTERY**

(30) Priority: 24.05.2023 KR 20230067028
(71) Applicant: Samsung SDI Co., Ltd., Yongin-si, Gyeonggi-do 17084 (KR)
(72) Inventor: Moon, Young Sik, 17084 Yongin-si, Gyeonggi-do, (KR)
(74) Representative: Gulde & Partner

(57) **Abstract**

A secondary battery includes: an electrode assembly including first and second electrode plates and a separator; first and second terminals respectively connected to the first and second electrode plates; a case accommodating the electrode assembly; and a cap plate sealing the case with the first and second terminals exposed therethrough. The cap plate has: a flat first surface; a flat second surface opposite to the first surface, a safety vent being coupled thereto; a stress reducing part having a thickness greater than that from the first surface to the second surface at a periphery of the second surface; a third flat surface opposite to the first surface and coupled to the case at a periphery of the stress reducing part; and a fourth flat surface opposite to the first surface and spaced apart from the case at a periphery of the stress reducing part.

## Description

### BACKGROUND

### 1. Field

Aspects of embodiments of the present disclosure relate to a secondary battery.

### 2. Description of the Related Art

Different from a primary battery that is not designed to be charged, a secondary battery is a battery that is designed to be charged and discharged. Low-capacity batteries are used in portable, small electronic devices, such as smart phones or digital cameras, and large-capacity secondary batteries in the form of a module in which dozens to hundreds of battery cells are connected are widely used as power sources for driving motors in hybrid vehicles, electric vehicles, or drones, and as energy storage devices (e.g., home or utility scale energy storage devices).

The above information disclosed in this Background section is for enhancement of understanding of the background of the present disclosure, and therefore, it may contain information that does not constitute prior art.

### SUMMARY

The present disclosure provides a secondary battery that avoids performance deterioration of a safety vent due to external or internal stress.

These and other aspects and features of the present disclosure will be described in or will be apparent from the following description of embodiments of the present disclosure.

A secondary battery, according to an embodiment of the present disclosure, includes: an electrode assembly including a first electrode plate, a separator, and a second electrode plate; a first terminal connected to the first electrode plate; a second terminal connected to the second electrode plate; a case accommodating the electrode assembly; and a cap plate sealing the case. The first and second terminals are exposed outside the case through the cap plate, and the cap plate has: a flat first surface; a flat second surface opposite to the first surface, a safety vent being coupled thereto; a stress reducing part having a thickness greater than that from the first surface to the second surface at a periphery of the second surface; a third flat surface opposite to the first surface and coupled to the case at a periphery of the stress reducing part; and a fourth flat surface opposite to the first surface and spaced apart from the case at a periphery of the stress reducing part.

The stress reducing part may protrude toward the electrode assembly from regions between the second surface, the third surface, and the fourth surface.

The cap plate may have a vent hole extending from the first surface to the second surface, and the safety vent may close the vent hole.

A thickness from the first surface to the second surface may be greater than a thickness from the first surface to the third surface.

The stress reducing part may have a flat fifth surface opposite to the first surface, and a thickness from the first surface to the fifth surface may be greater than a thickness from the first surface to the second surface.

A thickness from the first surface to the fifth surface may be greater than a thickness from the first surface to the third surface.

The stress reducing part may have: a flat sixth surface extending at a right angle direction from the fifth surface to the second surface; and a flat seventh surface opposite to the sixth surface and extending at a right angle direction from the fifth surface to the third surface and the second surface.

The safety vent may contact the sixth surface.

The seventh surface may have a case contact region contacting the case.

The seventh surface may have a case separation region spaced from the case.

The seventh surface may have a case contact region contacting the case and a case separation region spaced apart from the case, and the case contact region and the case separation region may be at right angle with respect to each other.

A thickness of the safety vent may be smaller than a thickness of the stress reducing part.

A thickness from the first surface to the second surface or a thickness from the first surface to the third surface may be in a range of 1.5 mm to 2 mm, and a thickness of the stress reducing part that protrudes from regions between the second, third, and fourth surfaces may be in a range of 0.7 mm to 0.9 mm.

The stress reducing part may have a rectangular, planar shape.

A thickness from the first surface to the second surface may be smaller than a thickness from the first surface to the third surface.

The thickness from the first surface to the second surface may be in a range of 0.9 mm to 1.4 mm.

### BRIEF DESCRIPTION OF DRAWINGS

The following drawings attached to this specification illustrate embodiments of the present disclosure and, together with the detailed description of the present disclosure, describe the technical idea of the present disclosure. Thus, the present disclosure should not be construed as being limited to the embodiments shown in such drawings.
FIG. 1A is a perspective view of a secondary battery according to an embodiment of the present disclosure, and FIG. 1B is a cross-sectional view taken along the line 1b-1b in FIG. 1A.
FIG. 2A is a partial, perspective cross-sectional view taken along the line 2a-2a in FIG. 1, and FIG. 2B is a partial, perspective view of a bottom surface of the cap plate shown in FIG. 1A.
FIG. 3 is a partial, perspective cross-sectional view taken along the line 2a-2a in FIG. 1 according to another embodiment.
FIG. 4 is a perspective view of a battery pack including a plurality of secondary batteries according to an embodiment of the present disclosure.
FIG. 5 is a perspective view of a vehicle including a battery pack according to an embodiment of the present disclosure.

### DETAILED DESCRIPTION

Hereinafter, embodiments of the present disclosure will be described, in detail, with reference to the accompanying drawings. Terms or words used in the present specification and claims are not to be narrowly interpreted according to their general or dictionary meanings but should be interpreted as having meanings and concepts that are consistent with the technical idea of the present disclosure on the basis of the principle that an inventor may properly define concepts of terms to describe his or her invention in the best way. Therefore, the embodiments described in this specification and the configurations shown in the drawings are only some of embodiments of the present disclosure and do not represent the entire technical scope of the present disclosure. It should be understood that there may be various variations that can be substituted or modified in the described embodiments at the time of this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively.

A reference to two comparable objects being "the same" means that they are "the same" or "substantially the same". Thus, the wording "substantially the same" may include a deviation that is considered low in the art, for example, a deviation of 5% or less. In addition, being uniform in a certain parameter in a predetermined region may mean that the parameter is uniform in terms of average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.
The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

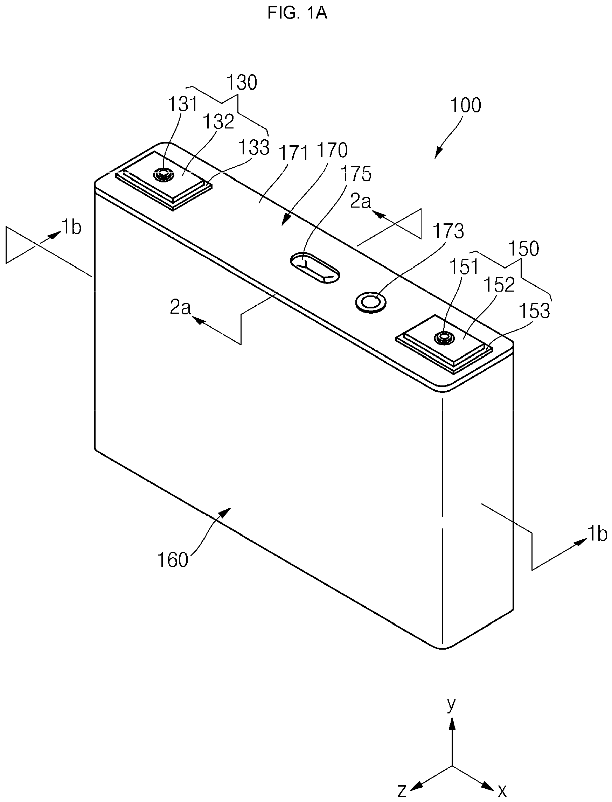

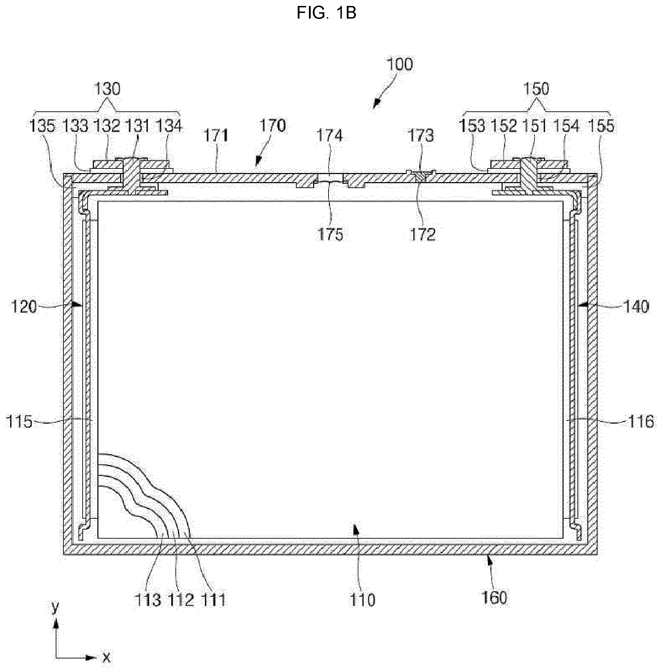

As shown in FIGS. 1A and 1B, a secondary battery 100, according to an embodiment of the present disclosure, includes an electrode assembly 110, a first terminal 130, a second terminal 150, a case 160, and a cap assembly 170. The secondary battery 100 may also include a first current collection part 120 and a second current collection part 140.

The electrode assembly 110 may be formed by winding or stacking a stack of a first electrode plate 111, a separator 112, and a second electrode plate 113, which are embodied as thin plates or films. When the electrode assembly 110 is a wound stack, a winding axis may be parallel to the longitudinal direction (e.g., the y direction in the drawings) of the case 160. However, the electrode assembly 110 may be a stack type rather than a winding type, and the shape of the electrode assembly 110 is not limited in the present disclosure. In addition, the electrode assembly 110 may be a Z-stack electrode assembly in which a positive electrode plate and a negative electrode plate are inserted into both sides of the separator 112, which is then bent into a Z-stack. In addition, one or more electrode assemblies 110 may be stacked such that long sides of the electrode assemblies 110 are adjacent to each other and accommodated in the case 160, and the number of electrode assemblies 110 in the case 160 is not limited in the present disclosure. The first electrode plate 111 of the electrode assembly 110 may act as a negative electrode, and the second electrode plate 113 may act as a positive electrode. Of course, the reverse is also possible in which the first electrode plate 111 of the electrode assembly 110 may act as a positive electrode, and the second electrode plate 113 may act as a negative electrode.

The first electrode plate 111 may include a first electrode current collection part formed of a metal foil, such as copper, a copper alloy, nickel, or a nickel alloy. The first electrode plate 111 may be formed by applying a first electrode active material, such as graphite or carbon to the first electrode current collection part. The first electrode plate 111 may include a first electrode tab (e.g., a first uncoated portion) 115, which is a region at where the first electrode active material is not applied. The first electrode tab 115 may act as a current flow path between the first electrode plate 111 and the first current collection part 120. In some embodiments, when the first electrode plate 111 is manufactured, the first electrode tab 115 may be formed by being cut in advance to protrude to one side of the electrode assembly 110 but may protrude to one side of the electrode assembly 110 more than (e.g., farther than or beyond) the separator 112 without being separately cut.

The second electrode plate 113 may include a second electrode current collection part formed of a metal foil, such as aluminum or an aluminum alloy. The second electrode plate 113 may be formed by applying a second electrode active material, such as a transition metal oxide on the second electrode current collection part. The second electrode plate 113 may include a second electrode tab 116 (e.g., a second uncoated portion), which is a region to which the second electrode active material is not applied. The second electrode tab 116 may act as a current flow path between the second electrode plate 113 and the second current collection part 140. In some embodiments, the second electrode tab 116 may be formed by being cut in advance to protrude to the other side (e.g., the opposite side) of the electrode assembly 110 when the second electrode plate 113 is manufactured but may protrude to the other side of the electrode assembly 110 more than (e.g., farther than or beyond) the separator 112 without being separately cut.

In some embodiments, the first electrode tab 115 may be located on (e.g., may protrude from) the left side of the electrode assembly 110, and the second electrode tab 116 may be located on (e.g., may protrude from) the right side of the electrode assembly 110 or may be located on one side (e.g., the same side) of the electrode assembly 110 in the same direction. Here, for convenience of description, the left and right sides are defined on the basis of the orientation of the secondary battery 100 as shown in FIG. 1B, and the positions thereof may change when the secondary battery 100 is rotated left and right or up and down.

The first electrode tab 115 of the first electrode plate 111 and the second electrode tab 116 of the second electrode plate 113 may be respectively positioned at both ends (e.g., at opposite ends) of the electrode assembly 110. In some embodiments, the electrode assembly 110 may be accommodated in the case 160 along with an electrolyte. The first current collection part 120 and the second current collection part 140 may be welded and connected to the first electrode tab 115 of the first electrode plate 111 and the second electrode tab 116 of the second electrode plate 113 exposed on both sides, respectively, to then be positioned thereat, respectively.

In some embodiments, the first electrode active material (or the negative electrode active material) may include a material capable of reversibly intercalating/deintercalating lithium ions, a lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

As described above, a negative electrode for a lithium secondary battery may include a current collection part and a negative electrode active material layer disposed on the current collection part. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as a binder. When an aqueous binder is used as the negative electrode binder, a cellulose-based compound capable of imparting viscosity may be further included.

In some embodiments, as the negative electrode current collection part, one selected from copper foil, nickel foil, stainless steel foil, titanium foil, nickel foam, copper foam, conductive metal-coated polymer substrate, and combinations thereof may be used.

In some embodiments, as the second electrode active material (or the positive electrode active material), a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and specific examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As described above, in some embodiments, a positive electrode for a lithium secondary battery may include a current collection part and a positive electrode active material layer formed on the current collection part. The positive electrode active material layer may include a positive electrode active material and may further include a binder and/or a conductive material.

The content of the positive electrode active material is about 90 wt% to about 99.5 wt% on the basis of 100 wt% of the positive electrode active material layer, and the content of the binder and the conductive material is about 0.5 wt% to about 5 wt%, respectively, on the basis of 100 wt% of the positive electrode active material layer.

In some embodiments, Al may be used as the current collection part, but it is not limited thereto.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, which may be used alone or in a combination of two or more.

In addition, when a carbonate-based solvent is used, a mixture of cyclic carbonate and chain carbonate may be used.

As described above, a separator may be present between the first electrode plate (or negative electrode) and the second electrode plate (or positive electrode) depending on the type of lithium secondary battery, the separator may include polyethylene, polypropylene, polyvinylidene fluoride, or may be a multilayer film of two or more layers thereof.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof, but it is not limited thereto.

The organic material and the inorganic material may exist in the form of being mixed in one coating layer or in the form in which a coating layer containing an organic material and a coating layer containing an inorganic material are laminated on each other.

The first current collection part 120 may be positioned at one end (e.g., at the left end) of the electrode assembly 110 with a length (e.g., with a longest dimension) in a substantially vertical direction, and the first current collection part 120 may be welded to the first electrode tab 115 of the electrode assembly 110. In some embodiments, the first current collection part 120 may include the same material as the first electrode tab 115. In some embodiments, if the first electrode tab 115 is copper-based or nickel-based, the first current collection part 120 may also be copper-based or nickel-based. Therefore, the first current collection part 120 and the first electrode tab 115 may be easily welded to each other.

The first terminal 130 may be electrically connected to the first electrode tab 115 of the electrode assembly 110 via the first current collection part 120. In some embodiments, the first terminal 130 may include a first terminal pillar 131 penetrating (or extending through) the cap plate 171 of the cap assembly 170, and, inside the case 160, the first current collection part 120 may be electrically connected to the first terminal pillar 131. In some embodiments, the material of the first terminal pillar 131 may be the same as that of the first current collection part 120. In some embodiments, the first terminal 130 is located on the cap plate 171 and may include a first terminal plate 132 (e.g., made of aluminum) coupled to the first terminal pillar 131, a first terminal upper insulating member 133 between the first terminal plate 132 and the cap plate 171, a first terminal seal gasket 134 interposed between the first terminal pillar 131 and the cap plate 171, and a first terminal lower insulating member 135 between the first current collection part 120 connected to the first terminal pillar 131 and the cap plate 171.

The second current collection part 140 may be positioned at one end (e.g., at the right end) of the electrode assembly 110 with a length (e.g., with a longest dimension) in a substantially vertical direction, and the second current collection part 140 may be welded to the second electrode tab 116 of the electrode assembly 110. In some embodiments, the second current collection part 140 may include the same material as the second electrode tab 116. In some embodiments, if the second electrode tab 116 is aluminum-based, the second current collection part 140 may also be aluminum-based. Therefore, the second current collection part 140 and the second electrode tab 116 may be easily welded to each other.

The second terminal 150 may be electrically connected to the second electrode tab 116 of the electrode assembly 110 via the second current collection part 140. In some embodiments, the second terminal 150 may include a second terminal pillar 151 penetrating (or extending through) the cap plate 171 of the cap assembly 170, and, inside the case 160, the second current collection part 140 may be electrically connected to the second terminal pillar 151. In some embodiments, the material of the second terminal pillar 151 may be the same as that of the second current collection part 140. In some embodiments, the second terminal 150 is located on the cap plate 171 and may include a second terminal plate 152 (e.g., made of aluminum) coupled to the second terminal pillar 151, a second terminal upper insulating member 153 between the second terminal plate 152 and the cap plate 171, second terminal seal gasket 154 interposed between the second terminal pillar 151 and the cap plate 171, and a second terminal lower insulating member 155 between the second current collection part 140 connected to the second terminal pillar 151 and the cap plate 171.

The case 160 may have a substantially rectangular parallelepiped shape having an opening formed at an upper portion (or an upper end) thereof. Accordingly, the electrode assembly 110, the first current collection part 120, and the second current collection part 140 may be inserted into the case 160 through the opening therein. The case 160 may have a bottom portion, a pair of long side portions extending from the bottom portion, and a pair of short side portions extending from the bottom portion and connecting (or extending between) the pair of long side portions, and the opening in the case 160 may be provided in a direction opposite to the bottom portion. In some embodiments, the case 160 may be made of aluminum or stainless steel and may be manufactured by using a deep drawing process or a bending and welding process.

The cap assembly 170 may include a cap plate 171 having a substantially flat shape. In some embodiments, the cap plate 171 may be provided as a thin plate and may be coupled to the opening of the case 160 to seal the opening. In addition, the cap plate 171 may have an electrolyte injection part (e.g., an electrolyte injection hole or opening) 172 for injecting electrolyte into the sealed case 160 and a sealing plug 173 for closing the electrolyte injection part 172 after the electrolyte is injected into the case 160. In addition, the cap plate 171 may have a vent hole (e.g., a vent opening) 174 and a safety vent 175 coupled to the vent hole 174 that is configured to be broken (e.g., to burst or break) when the internal pressure inside the sealed case 160 exceeds a set (or reference) pressure. In some embodiments, the material of the cap plate 171 may be the same as or similar to that of the case 160.

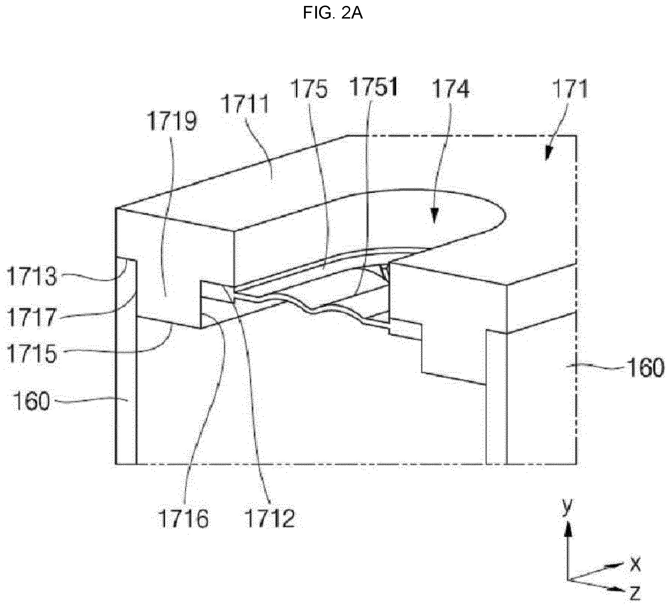

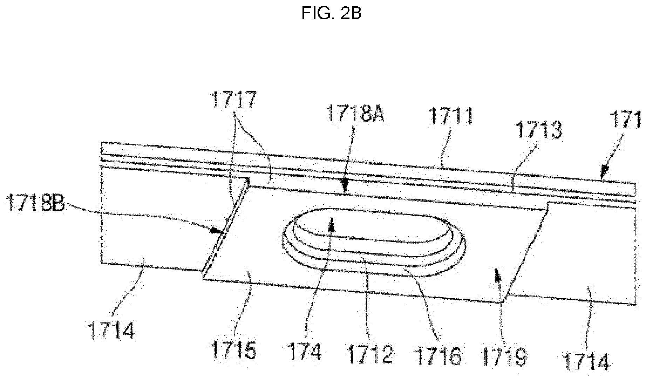

FIG. 2A is a partial, perspective cross-sectional view taken along the line 2a-2a in FIG. 1, and FIG. 2B is a partial perspective view of a bottom surface of the cap plate shown in FIG. 1A.

As shown in FIGS. 2A and 2B, the cap assembly 170 includes the cap plate 171. In some embodiments, the cap plate 171 includes the vent hole 174 and the safety vent 175 closing (e.g., sealing) the vent hole 174.

The cap plate 171 may have a substantially flat plate shape. In some embodiments, the cap plate 171 has a substantially flat first surface (or upper surface) 1711 and a substantially flat second surface (or bottom surface) 1712 opposite to the first surface 1711. The safety vent 175 may be bonded or welded to the second surface 1712. The cap plate may further comprise a stress reducing part 1719 which has a thickness greater than a thickness of the cap plate 171 from the first surface 1711 to the second surface 1712 on the outside of (e.g., along a periphery of) the second surface 1712, a third flat surface 1713 which is opposite to the first surface 1711 and is coupled to the case 160 on the outside of (e.g., along a periphery of) the stress reducing part 1719, and a fourth flat surface 1714 which is opposite to the first surface 1711 and is spaced apart from the case 160 on the outside of (e.g., along a periphery of) the stress reducing part 1719. In some embodiments, the fourth surface 1714 may be a surface substantially facing the electrode assembly 110. The cap plate 171 may have a substantially flat, cuboid form, and may have an increased thickness in the area comprising the vent hole 174. To make the outward appearance favorable and smooth, the area having an increased thickness may protrude towards the inside of the case 160. Hence, the surface of the cap plate 171 facing outwards, e.g., the upper surface, may be substantially flat despite the increased thickness of the cap plate 171 in the area comprising the vent hole 174.

In some embodiments, the stress reducing part 1719 may protrude toward the electrode assembly 110 from a region defined by (or delimited by) the second surface 1712, the third surface 1713, and the fourth surface 1714. The stress reducing part 1719 may be arranged in the area of increased thickness. The stress reducing part 1719 may be arranged surrounding the vent hole 174. The area of the cap plate 171 comprising the fourth surface 1714 may have no increased thickness. In other words, the fourth surface may delimit a portion of the cap plate 171 which does not comprise the vent hole 175and/or the stress reducing part 1719. In some embodiments, the vent hole 174 may penetrate (or may extend) between the first surface 1711 and the second surface 1712 and may be closed (e.g., sealed) by the safety vent 175. In some embodiments, when viewed from the bottom, the vent hole 174 has a substantially elliptical or circular shape. In addition, when viewed from the bottom, the second surface 1712 may also have a substantially elliptical ring or circular ring shape. The dimension, e.g., the diameter, of the second surface 1712 may be larger than the dimension, e.g., the diameter, of the vent hole to allow the formation of a surface for bonding (e.g. welding) the safety vent 175 to the cap plate 171. For example, the safety vent 175 may be welded to the second surface 1712. In addition, the safety vent 175 may have a substantially Y-shaped notch 1751. In some embodiments, the thickness of the safety vent 175 is smaller than the thickness of the cap plate 171 and/or smaller than the thickness of the stress reducing part 1719. Accordingly, the safety vent 175 and/or the notch 1751 in the safety vent may be broken (e.g., may burst or break) when the internal pressure of the case 160 becomes greater than the set (or reference) pressure. In some embodiments, the thickness from the first surface 1711 to the second surface 1712 may be greater than the thickness from the first surface 1711 to the third surface 1713.

In some embodiments, the stress reducing part 1719 includes a flat fifth surface 1715 that is opposite to the first surface 1711, and the thickness from the first surface 1711 to the fifth surface 1715 may be greater than the thickness from the first surface 1711 to the second surface 1712. In some embodiments, the thickness from the first surface 1711 to the fifth surface 1715 is greater than the thickness from the first surface 1711 to the third surface 1713. The second surface 1712, the third surface 1713 and the fifth surface 1715 may extend in a horizontal direction. The second surface 1712, the third surface 1713 and the fifth surface 1715 may be arranged such that they do not overlap. When viewed from a bottom direction, the sum of the areas of the second surface 1712, the third surface 1713 and the fifth surface 1715 may equal the area of the first surface 1711.

In some embodiments, the stress reducing part 1719 includes a flat sixth surface 1716, which extends substantially perpendicularly from the fifth surface 1715 to the second surface 1712, and a flat seventh surface 1717, which is opposite to the sixth surface 1716 and extends substantially perpendicularly from the fifth surface 1715 to the third surface 1713 and the fourth surface 1714. The sixth surface 1716 and/or the seventh surface 1717 may extend in a substantially vertical direction. An area of increased thickness may protrude from a bottom side of the cap plate 171 and may be delimited by the fifth surface 1715, the sixth surface 1716 and the seventh surface 1717, which may form a bottom side, a side facing the interior of the case 160, and a side facing a wall of the casing 160, respectively.

In some embodiments, the lateral side of the safety vent 175 may be in contact with or may be welded to the sixth surface 1716 of the stress reducing part 1719.

In some embodiments, the seventh surface 1717 of the stress reducing part 1719 may have a case contact region 1718A that is in contact with and/or welded to the case 160. In some embodiments, the case contact region 1718A is in contact with and/or welded to the long side region of the case 160. In some embodiments, the seventh surface 1717 of the stress reducing part 1719 has a case separation region 1718B spaced apart from the case 160. In some embodiments, the case separation region 1718B may face a short side region of the case 160. In some embodiments, the case separation region 1718B may be spaced apart from the short side region of the case 160. The case separation region 1718B may extend in a direction substantially perpendicular to the direction in which the case contact region 1718A extends.

In some embodiments, the seventh surface 1717 of the stress reducing part 1719 includes both the case contact region 1718A in contact with the case 160 and that case separation region 1718B spaced apart from the case 160. In some embodiments, the case contact region 1718A and the case separation region 1718B are approximately perpendicular to each other.

In some embodiments, the thickness from the first surface 1711 to the second surface 1712 and the thickness from the first surface 1711 to the third surface 1713 are each in a range of approximately 1.5 mm to approximately 2 mm, in a range of approximately 1.6 mm to approximately 1.9 mm, or in a range of approximately 1.7 mm to approximately 1.8 mm. In some embodiments, the thickness of the stress reducing part 1719 protruding from the region defined by the second surface 1712, the third surface 1713, and the fourth surface 1714 is in a range of approximately 0.7 mm to approximately 0.9 mm and, in one embodiment, is approximately 0.8 mm.

In some embodiments, the planar shape of the stress reducing part 1719 is substantially rectangular or substantially square.

Thus, according to embodiments of the present disclosure, the cap plate 171 mitigates or prevents performance degradation of the safety vent 175 due to external and/or internal stress. For example, the rigidity of the cap plate 171 may be increased by providing a relatively thick stress reducing part 1719 around a region on which the safety vent 175 is seated. Accordingly, the stiffness of the cap plate 171 may be increased to withstand external stress (e.g., pressure applied from the outside of the cell during module or pack assembly) and/or internal stress (e.g., internal pressure that increases during the lifetime of the cell, including the phenomenon in which the case 160 swells due to an increased internal pressure). Thus, as the rigidity of the cap plate 171 increases, fine cracks are less likely to be generated in the notch in the safety vent 175. Thus, according to embodiments of the present disclosure, a decrease in the rupture pressure of the safety vent 175 or leakage of an electrolyte through the safety vent 175 due to fine cracks can be prevented.

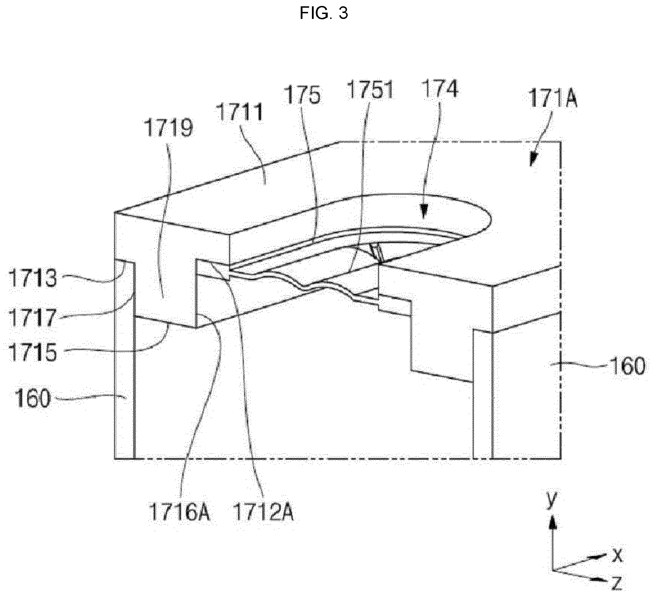

FIG. 3 is a partial, perspective cross-sectional view taken along the line 2a-2a in FIG. 1 according to another embodiment. The cap plate 171A shown in FIG. 3 is similar to the cap plate 171 shown in FIGS. 2A and 2B except that the second surface 1712A, on which the safety vent 175 is seated, is recessed farther toward the first surface 1711 compared to the second surface 1712 shown in FIGS. 2A and 2B. In some embodiments, the thickness from the first surface 1711 to the second surface 1712A may be smaller than the thickness from the first surface 1711 to the third surface 1713. In other words, the area of the cap plate 171A to chich the savety vent 175 is bonded may have a smaller thickness than the area of the cap plate 171A which sits on the case 160. In some embodiments, the thickness from the first surface 1711 to the second surface 1712A may be in a range of approximately 0.9 mm to approximately 1.4 mm, in a range of approximately 1.0 mm to approximately 1.3 mm, or in a range of approximately 1.1 mm to approximately 1.2 mm. Thus, the safety vent 175 is located closer to (e.g., nearer to) the first surface 1711 than in the above-described embodiment, and the height (e.g., the height in a lateral direction of the cap plate 171A) of the sixth surface 1716A in contact with the side surface of the safety vent 175 is relatively increased compared to the sixth surface 1716 in the above-described embodiment.

As described above, because the region of the cap plate 171A at where the safety vent 175 is located is closer to the first surface 1711 of the cap plate 171, the rigidity of the cap plate 171 may be increased. In other words, as the height of the sixth surface 1716A of the stress reducing part 1719 increases, the rigidity of the cap plate 171 may increase.

The secondary battery 100, according to the above-described embodiments, may be used to manufacture a battery pack 200.

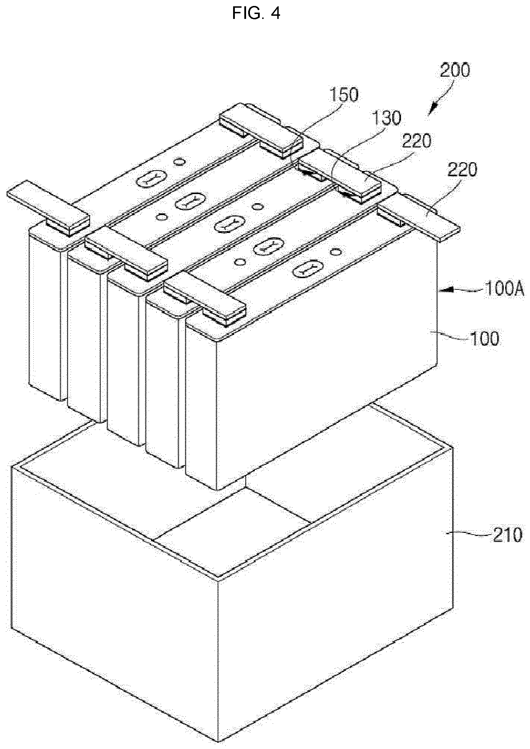

FIG. 4 is a perspective view of a battery pack 200 including a plurality of secondary batteries 100 according to an embodiment of the present disclosure.

Referring to FIG. 4, the battery pack 200, according to an embodiment of the present disclosure, includes an assembly 100A, in which individual secondary batteries 100 are electrically connected together via bus bars 220, and a pack housing 210 accommodating the assembly 100A. In the drawings, for convenience of illustration, components including a cooling unit, an external terminal, and a battery monitoring system, etc., are omitted.

The battery pack 200 may be mounted on (or in) a vehicle 300. The vehicle 300 may be, for example, an electric vehicle, a hybrid vehicle, or a plug-in hybrid vehicle. A vehicle may include a four-wheeled vehicle or a two-wheeled vehicle but is not limited thereto.

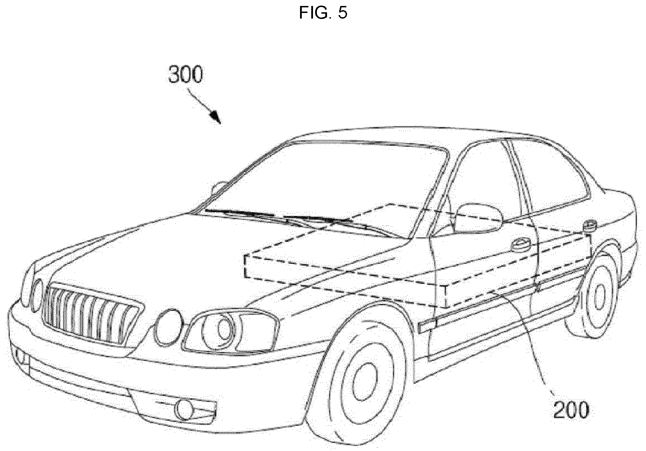

FIG. 5 is a perspective view of a vehicle including a battery pack according to an embodiment of the present disclosure.

Referring to FIG. 5, the vehicle 300, according to an embodiment of the present disclosure, may include the battery pack 200 according to an embodiment of the present disclosure. The vehicle 300 may operate by receiving power from the battery pack 200 according to an embodiment of the present disclosure.

As described above, according to embodiments of the present disclosure, a secondary battery that avoids or prevents performance deterioration of a safety vent due to external and/or internal stress is provided. In some embodiments, by increasing the peripheral thickness of the vent seating area of the cap plate and/or by changing the location of the vent seating area of the cap plate, the stiffness (or rigidity) of the cap plate may be increased. Accordingly, the stiffness of the cap plate to withstand external stress (e.g., pressure applied from the outside of the battery cell during module or pack assembly) and/or internal stress (e.g., internal pressure that increases during the lifetime of the battery cell) is increased, and thus, fine cracks are less likely to be generated in the notch in the safety vent. Thus, according to embodiments of the present disclosure, by preventing a decrease in the rupture pressure of a safety vent or leakage of an electrolyte through the safety vent due to fine cracks, reliability of the secondary battery used for a long period of time may be improved.

According to embodiments of the present disclosure, a battery module or battery pack manufactured by using the secondary battery having an improved structure and a vehicle including the same may be provided.

However, aspects and features of the present disclosure are not limited to those described above, and other aspects and features not mentioned will be clearly understood by a person skilled in the art from the description of the present disclosure described above.

The foregoing embodiments are only some embodiments for carrying out the present disclosure, which is not limited to these embodiments. It will be understood by a person skilled in the art that various changes in form and details may be made therein without departing from the scope of the present disclosure as defined by the following claims.

## Claims

1. A secondary battery (100) comprising:
an electrode assembly (110) comprising a first electrode plate (111), a separator (112), and a second electrode plate (113);
a first terminal (130) connected to the first electrode plate (111);
a second terminal (150) connected to the second electrode plate (113);
a case (160) accommodating the electrode assembly (110); and
a cap plate (171, 171A) sealing the case (160), the first and second terminals (150) being exposed outside the case (160) through the cap plate (171, 171A), the cap plate (171, 171A) has:
a flat first surface (1711);
a flat second surface (1712, 1712A) opposite to the first surface (1711), a safety vent (175) being coupled thereto;
a stress reducing part (1719) having a thickness greater than that from the first surface (1711) to the second surface (1712, 1712A) at a periphery of the second surface (1712, 1712A);
a third flat surface (1713) opposite to the first surface (1711) and coupled to the case (160) at a periphery of the stress reducing part (1719); and
a fourth flat surface (1714) opposite to the first surface (1711) and spaced apart from the case (160) at a periphery of the stress reducing part (1719).

2. The secondary battery (100) as claimed in claim 1, wherein the stress reducing part (1719) protrudes toward the electrode assembly (110) from regions between the second surface (1712, 1712A), the third surface (1713), and the fourth surface (1714).

3. The secondary battery (100) as claimed in any one of claims 1 and 2, wherein the cap plate (171, 171A) has a vent hole (174) extending from the first surface (1711) to the second surface (1712, 1712A), and
wherein the safety vent (175) closes the vent hole (174).

4. The secondary battery (100) as claimed in any one of the previous claims, wherein a thickness from the first surface (1711) to the second surface (1712, 1712A) is greater than a thickness from the first surface (1711) to the third surface (1713).

5. The secondary battery (100) as claimed in any one of the previous claims, wherein the stress reducing part (1719) has a flat fifth surface (1715) opposite to the first surface (1711), and
wherein a thickness from the first surface (1711) to the fifth surface (1715) is greater than a thickness from the first surface (1711) to the second surface (1712, 1712A).

6. The secondary battery (100) as claimed in claim 5, wherein a thickness from the first surface (1711) to the fifth surface (1715) is greater than a thickness from the first surface (1711) to the third surface (1713).

7. The secondary battery (100) as claimed in any one of claims 5 and 6, wherein the stress reducing part (1719) has:
a flat sixth surface (1716, 1716A) extending at a right angle direction from the fifth surface (1715) to the second surface (1712, 1712A); and
a flat seventh surface (1717) opposite to the sixth surface (1716, 1716A) and extending at a right angle direction from the fifth surface (1715) to the third surface (1713) and the second surface (1712, 1712A).

8. The secondary battery (100) as claimed in claim 7, wherein the safety vent (175) contacts the sixth surface (1716, 1716A).

9. The secondary battery (100) as claimed in any one of claims 7 or 8, wherein the seventh surface (1717) has a case contact region (1718A) contacting the case (160), and/or wherein the seventh surface (1717) has a case separation region (1718B) spaced from the case (160).

10. The secondary battery (100) as claimed in any one of claims 7 to 9, wherein the seventh surface (1717) has a case contact region (1718A) contacting the case (160) and a case separation region (1718B) spaced apart from the case (160), and
wherein the case contact region (1718A) and the case separation region (1718B) are at right angle with respect to each other.

11. The secondary battery (100) as claimed in any one of the previous claims, wherein a thickness of the safety vent (175) is smaller than a thickness of the stress reducing part (1719).

12. The secondary battery (100) as claimed in any one of the previous claims, wherein a thickness from the first surface (1711) to the second surface (1712, 1712A) or a thickness from the first surface (1711) to the third surface (1713) is in a range of 1.5 mm to 2 mm, and
wherein a thickness of the stress reducing part (1719) that protrudes from regions between the second, third, and fourth surfaces (1714) is in a range of 0.7 mm to 0.9 mm.

13. The secondary battery (100) as claimed in any one of the previous claims, wherein the stress reducing part (1719) has a rectangular, planar shape.

14. The secondary battery (100) as claimed in any one of the previous claims, wherein a thickness from the first surface (1711) to the second surface (1712, 1712A) is smaller than a thickness from the first surface (1711) to the third surface (1713).

15. The secondary battery (100) as claimed in claim 14, wherein the thickness from the first surface (1711) to the second surface (1712, 1712A) is in a range of 0.9 mm to 1.4 mm.
